# EUROPEAN PATENT SPECIFICATION

(11) **EP 3 930 419 B1**
(45) Date of publication and mention of the grant of the patent: **10.05.2023**
(21) Application number: 19947866.0
(22) Date of filing: 30.09.2019
(51) Int. Cl.: H04W 36/36, H04W 52/02, H04W 36/00, H04W 76/16

(54) **METHOD FOR PROCESSING SN RRC MESSAGES, USER EQUIPMENT AND STORAGE MEDIUM**
VERFAHREN ZUR VERARBEITUNG VON SN RRC NACHRICHTEN, BENUTZERENDGERÄT UND SPEICHERMEDIUM
PROCÉDÉ PERMETTANT DE TRAITER DES MESSAGES RRC SN, DISPOSITIF UTILISATEUR ET SUPPORT DE STOCKAGE

(43) Date of publication of application: 29.12.2021
(73) Proprietor: GUANGDONG OPPO MOBILE TELECOMMUNICATIONS CORP., LTD., Dongguan, Guangdong 523860 (CN)
(72) Inventor: YANG, Ning, Dongguan, Guangdong 523860 (CN)
(74) Representative: Manitz Finsterwald Patent- und Rechtsanwaltspartnerschaft mbB
(86) International application number: PCT/CN2019/109385
(87) International publication number: WO 2021/062606

(56) References cited:
- EP-A1- 3 101 972
- CN-A- 102 083 154
- CN-A- 105 592 549
- US-B2- 10 292 081
- ERICSSON: "MN-initiated SN modification", 3GPP DRAFT; R2-1801078 - MN-INITIATED SN MODIFICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Vancouver, Canada; 20181222 - 20181226 11 January 2018 (2018-01-11), XP051385876, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-11]
- HUAWEI: "Introduction of conditiona SN change procedure", 3GPP DRAFT; R3-194117, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Ljubljana, Slovenia; 20190826 - 20190830 17 August 2019 (2019-08-17), XP051770313, Retrieved from the Internet: URL:http://www.3gpp.org/ftp/tsg_ran/WG3_Iu /TSGR3_105/Docs/R3-194117.zip [retrieved on 2019-08-17]
- NTT DOCOMO ET AL: "Support of Conditional PSCell addition/change", 3GPP DRAFT; R2-1911344_SUPPORT OF CONDITIONAL PSCELL ADDITION_CHANGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Prague, Czech; 20190826 - 20190830 16 August 2019 (2019-08-16), XP051769101, Retrieved from the Internet: URL:http://www.3gpp.org/ftp/tsg_ran/WG2_RL 2/TSGR2_107/Docs/R2-1911344.zip [retrieved on 2019-08-16]
- NEC: "Reuse of conditional handover for SCG change in NR-DC", 3GPP DRAFT; R2-1909144_NRDC COND SCG CH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20190826 - 20190830 15 August 2019 (2019-08-15), XP051766952, Retrieved from the Internet: URL:http://www.3gpp.org/ftp/tsg_ran/WG2_RL 2/TSGR2_107/Docs/R2-1909144.zip [retrieved on 2019-08-15]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 12)", 3GPP STANDARD; 36300-C40, 3RD GENERATION PARTNERSHIP PROJECT (3GPP)?, MOBILE COMPETENCE CENTRE ; 650, ROUTE DES LUCIOLES ; F-06921 SOPHIA-ANTIPOLIS CEDEX ; FRANCE , 5 January 2015 (2015-01-05), XP050907554, Retrieved from the Internet: URL:http://www.3gpp.org/ftp/Specs/2014-12/ Rel-12/36_series/ [retrieved on 2015-01-05]
- Intel Corporation: "NR Mobility Enhancements", 3GPP Draft; RP-192278_Status report for NR Mobility Enhancements_v04, vol. TSG RAN, 20 September 2019 (2019-09-20), pages 1-17, XP051779500, Newport Beach, USA

## Description

### TECHNICAL FIELD

The present disclosure relates to the technical field of mobile communications, and particularly to, a solution for processing a Secondary Node Radio Resource Control (SN RRC) message during a Primary Secondary Cell (PSCell) change.

### BACKGROUND

The Third Generation Partnership Project (3GPP) has carried out researches and developments of New Radio (NR) systems.

In an NR system, Multi-RAT Dual Connectivity (MR-DC) scenarios are supported. In the dual connectivity scenarios, User Equipment (UE) simultaneously establishes a dual connection with a Master Node (source MN) and a Secondary Node (SN), the MN provides a primary cell (PSCell), and the SN provides a secondary cell (PSCell). Herein, a PSCell change can occur within a same SN, or between different SNs (i.e., a source SN and a target SN).

Since a concept of conditional handover is introduced in the PSCell change, the PSCell change is no longer fully controlled by a network side. That is, the network side (the source MN and the source SN) cannot accurately know when the UE satisfies a conditional PSCell change. Thus, there is a scenario that the source SN continues sending the SN RRC message to the UE, and how the UE processes the SN RRC message during the PSCell change is an urgent problem need to be solved. Related technologies are also known from 3GPP DRAFT R2-1801078 and 3GPP DRAFT R3-194117.

### SUMMARY

The present invention is set out in the appended claims. The embodiments of the present disclosure provide a method for processing an SN RRC message, a user equipment and a storage medium. The following aspects are provided for illustrative purposes.

According to an aspect of the present disclosure, there is provided a method for processing an SN RRC message, the method including:
stopping receiving a first SN RRC message from a source Secondary Node during a first Primary Secondary Cell (PSCell) change.

According to an aspect of the present disclosure, there is provided a method for processing an SN RRC message, the method including:
receiving a second SN RRC message from the source Master Node (MN) during the first PSCell change.
ignoring or responding to, the second SN RRC message according to a type of the second SN RRC message.

According to an aspect of the present disclosure, there is provided a device for processing an SN RRC message, the device including:
a receiving module, configured to stop receiving a first SN RRC message from a source Secondary Node (SN) during a first Primary Secondary Cell (PSCell) change.

According to an aspect of the present disclosure, there is provided a device for processing an SN RRC message, the device including:
a receiving module, configured to receive the second SN RRC message from a source Master Node (MN) during a first Primary Secondary Cell (PSCell) change.
a change module, configured to ignore or respond to the second SN RRC message according to a type of the second SN RRC message.

According to an aspect of the present disclosure, there is provided a UE, the UE includes a processor; a transceiver connected to the processor and a memory configured to store instructions executable by the processor; herein the processor is configured to load and execute the executable instructions to implement the method for processing an SN RRC message described above.

According to an aspect of the present disclosure, there is provided a computer-readable storage medium having stored thereon executable instructions that are loaded by a processor and configured to perform the method for processing an SN RRC message described above.

According to an aspect of the present disclosure, there is provided a UE, the UE includes a processor; a transceiver connected to the processor; and a memory configured to store instructions executable by a processor; herein the processor is configured to load and execute the executable instructions to implement the method for processing an SN RRC message described above.

According to an aspect of the present disclosure, there is provided a computer-readable storage medium having stored thereon executable instructions that are loaded by the processor and configured to perform the method for processing an SN RRC message described above.

According to an aspect of the present disclosure, there is provided a chip including a programmable logic circuit or program instruction, wherein the programmable logic circuit or program instruction is configured to perform the method for processing an SN RRC message described above.

According to an aspect of the present disclosure, there is provided a computer program product including computer program instructions that cause a computer to perform the method for processing an SN RRC message described above.

The technical solutions provided by the embodiments of the present disclosure have at least beneficial effects as follows.

During a first conditional Primary Secondary Cell (PSCell) change, the UE does not receive the SN RRC message from the source SN, it is thus possible to avoid conflicts between the SN RRC message of the source SN and the ongoing first PSCell change. In addition, since a part of the Radio Frequency (RF) channel of the UE has already started to synchronize the target PSCell, not monitoring the SN RRC message transmitted by the source SN via the SRB3 can prevent the UE from adding another RF channel for monitoring. It is thus possible to reduce hardware complexity and power consumption of the UE and eliminate the need to adding additional capabilities to the UE.

### BRIEF DESCRIPTION OF THE DRAWINGS

In order to describe the technical solutions of the embodiments of the present disclosure more clearly, the drawings required to be used for description of the embodiments will be simply introduced below. Apparently, the drawings described below are only provided for some embodiments of the present disclosure. For those skilled in the art, other drawings may further be obtained according to these drawings without creative work.
FIG. 1 is a block diagram of a communication system according to an exemplary embodiment of the present disclosure;
FIG. 2 is a block diagram of a communication system according to an exemplary embodiment of the present disclosure;
FIG. 3 is a flowchart of a conditional PScell change according to an exemplary embodiment of the present disclosure;
FIG. 4 is a flowchart of a method for processing an SN RRC message according to an exemplary embodiment of the present disclosure;
FIG. 5 is a flowchart of a method for processing an SN RRC message according to an exemplary embodiment of the present disclosure;
FIG. 6 is a flowchart of a method for processing an SN RRC message according to an exemplary embodiment of the present disclosure;
FIG. 7 is a block diagram of a device for processing an SN RRC message according to an exemplary embodiment of the present disclosure;
FIG. 8 is a block diagram of a communication device according to an exemplary embodiment of the present disclosure.

### DETAILED DESCRIPTION

In order to make the objectives, technical solutions, and advantages of the present disclosure more clearly, the following will further describe the embodiments of the present disclosure in detail with reference to the accompanying drawings.

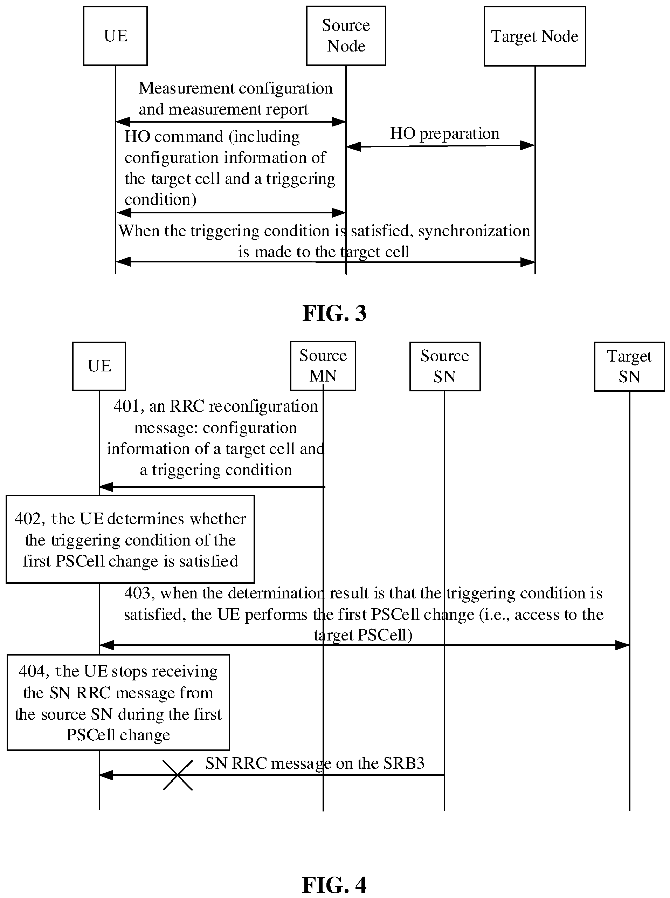

In the following detailed description, the invention is described with reference to figures 4, 5 and 7, while the description of the remaining figures is provided for illustrative purposes for a better understanding of the invention.

The communication system and business scenarios described in the embodiments of the present disclosure are intended to more clearly illustrate the technical solutions of the embodiments of the present disclosure, and do not constitute a limitation to the technical solutions provided by the embodiments of this application. Those of ordinary skill in the art will know that with the evolution of the communication system and the emergence of new business scenarios, the technical solutions provided in the embodiments of the present disclosure are equally applicable to similar technical problems.

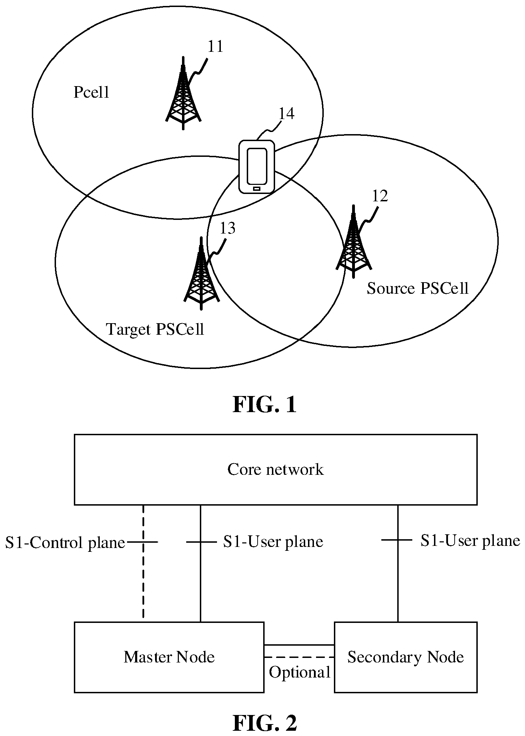

FIG. 1 and FIG. 2 are block diagrams of a communication system according to an exemplary embodiment of the present disclosure. The communication system may include: a first access network device 11, a second access network device 12, and a third access network device 13 and UE 14.

The first access network device 11 is a source MN. The first access network device 11 is a base station corresponding to a primary cell.

The second access network device 12 is a source SN. The second access network device 12 is a base station corresponding to a source PSCell.

The third access network device 13 is a target SN. The third access network device 13 is a base station corresponding to a target PSCell. In some embodiments, the source SN and the target SN can be a same SN.

In a Multi-RAT Dual Connectivity (MR-DC) scenario, referring to FIG. 2, a master node (source MN) and a secondary node (SN) are connected to a core network. Taking an EN-DC scenario as an example, a control plane connection via an S1 interface and a user plane connection via the S1 interface are established between the master node and the core network; a user plane connection via the S1 interface is established between the secondary node and the core network. A user plane connection is also established between the master node and the secondary node, and optionally a control plane connection is also established between the master node and the secondary node.

Multiple dual connection forms are supported in the MR-DC scenario.

### 1. E-UTRA-NR Dual Connectivity (EN-DC)

The core network is a 4G core network, that is, an Evolved Packet Core (EPC), the master node is an eNB in a 4G system, and the secondary node is a gNB in a 5G system.

### 2. NG-RAN E-UTRA-NR Dual Connectivity (NREN-DC)

The core network is a next generation core network (5GC), the master node is an eNB (eLTE eNB) of an evolved 4G system, and the secondary node is an NR gNB in a 5G system.

### 3. NR-E-UTRA Dual Connectivity (NR-DC)

The core network is a next-generation core network, the master node is an NR gNB, and the secondary node is another NR gNB.

### 4. NR-E-UTRA Dual Connectivity (NE-DC)

The core network is a next-generation core network, the master node is an NR gNB, and the secondary node is an eNB (eLTE eNB) in an evolved 4G system.

In an initial state, the UE 14 has a first connection with the source MN and a second connection with the source SN, that is, a dual connection. During a conditional PScell change, the UE needs to switch from the source PSCell to the target PSCell.

### Handover triggered based on a condition (conditional handover)

To solve the problem that there are frequent handovers and handover failures in high-speed mobility scenarios and high-frequency deployment scenarios, the 3GPP has introduced a conditional handover for LTE and NR systems. The basic principle is as follows. UE performs handover to a target cell according to a pre-configured handover command (i.e., triggering the random access process and sending handover complete message) when evaluating a triggering condition related to the target cell according to a condition configured by the network side, so as to avoid the problem of having not enough time or unable to send measurement reports and receive the handover command due to moving with high speed into areas with poor coverage.

As illustrated in FIG. 2, the process includes: a source base station sends measurement configurations of the target cell to the UE. The UE reports the measurement report of the target cell to the source base station. The source base station sends the handover preparation to the target base station according to the measurement report. The source base station also sends a handover command to the UE, and the handover command includes a triggering condition related to the target cell (or beam). The UE triggers handover from the source PSCell to the target PSCell when the triggering condition related to the target cell is triggered.

According to FIG. 2, since the concept of conditional handover is introduced in the PSCell change process, the PSCell change is no longer fully controlled by the network side, that is, the network side (source MN and source SN) cannot accurately know when the user equipment (UE) satisfies a conditional PScell change. Thus, there is a scenario that the source SN continues sending the SN RRC message to the UE, and how the UE processes the SN RRC message during the PSCell change is an urgent problem to be solved.

For a conditional PScell change, the present disclosure provides embodiments in which the UE processes the SN RRC message. The embodiments include at least one of the following three processing manners.

In a first processing manner, during a PSCell change, the UE stops receiving a first SN RRC message sent by the source SN.

In a second processing manner, during a PSCell change, the UE receives a second SN RRC message containing a PSCell change instruction from the source MN, and performs the PSCell change instruction.

In a third processing manner, during a PSCell change, the UE receives a second SN RRC message containing a source PSCell reconfiguration message from the source MN, and ignores the PSCell reconfiguration message.

Among them, the SN RRC message in the first processing manner is a first SN RRC message transmitted by the source SN on a Signal Radio Bearer (SRB) 3. The SN RRC message in the second processing manner and the third processing manner is a second SN RRC message transmitted by the source MN on the SRB 1. The UE determines to ignore or respond to the second SN RRC message according to a type of the second SN RRC message.

For the first processing manner (the UE stops receiving the SN RRC message on the SRB3 during the PSCell change), an embodiment is described as follows.

FIG. 4 shows a flowchart of a method for processing an SN RRC message according to an exemplary embodiment of the invention. The method may be used in the communication system shown in FIG. 1, and the method includes operations as follows.

In operation 401, a master node sends an RRC reconfiguration message to UE, where the RRC reconfiguration message carries configuration information of a target PSCell and a triggering condition.

The configuration information of the target PSCell includes but is not limited to at least one of the following information: Medium Access Control (MAC) parameters of the target PSCell, Radio Resource Control (RRC) parameters of the target PSCell, Packet Data Convergence Protoco1 (PDCP) layer parameters of the target PSCell, measurement configuration of the target PSCell, etc.

The triggering condition is a triggering condition for the first conditional PSCell change, or the triggering condition is a triggering condition for a conditional handover to a target PSCell. For example, the triggering condition includes at least one of: a measurement event A3, a measurement event A5, or a measurement event A6.

The source master node configures, on the SRB 1 for the UE in a connected state, configuration information of the target PSCell and the triggering condition of the first PSCell change.

As another example, an RRC reconfiguration message may be sent by the source SN on the SRB 3 to the UE in the connected state. The RRC reconfiguration message carries the configuration information of the target PSCell and the triggering condition of the first PSCell change.

In operation 402, the UE determines whether the triggering condition of the first PSCell change is satisfied.

When the triggering condition is satisfied, proceed to operation 403; when the triggering condition is not satisfied, operation 402 is continued.

In operation 403, when the determination result is that the triggering condition is satisfied, the UE performs the first PSCell change (i.e., access to the target PSCell).

When triggering condition is satisfied, the UE starts to perform the change procedure from the source PSCell to the target PSCell.

In operation 404, the UE stops receiving the SN RRC message from the source SN during the first PSCell change.

That is, the UE stops receiving the SN RRC message transmitted by the source SN via the SRB 3.

To sum up, according to the method provided in the embodiment, during a conditional PScell change, the UE does not receive the SN RRC message transmitted by the source SN via the SRB3, it is thus possible to avoid conflicts between the SN RRC message of the source SN and the ongoing first PSCell change. In addition, since a part of the Radio Frequency (RF) channel of the UE has already started to synchronize the target PSCell, not monitoring the SN RRC message transmitted by the source SN via the SRB3 can prevent the UE from adding another RF channel for monitoring. It is thus possible to reduce hardware complexity and power consumption of the UE and eliminate the need to adding additional capabilities to the UE.

For the above second processing manner (during the PSCell change, the UE receives the PSCell change instruction from the source MN, and performs the received instruction), an embodiment is described as follows.

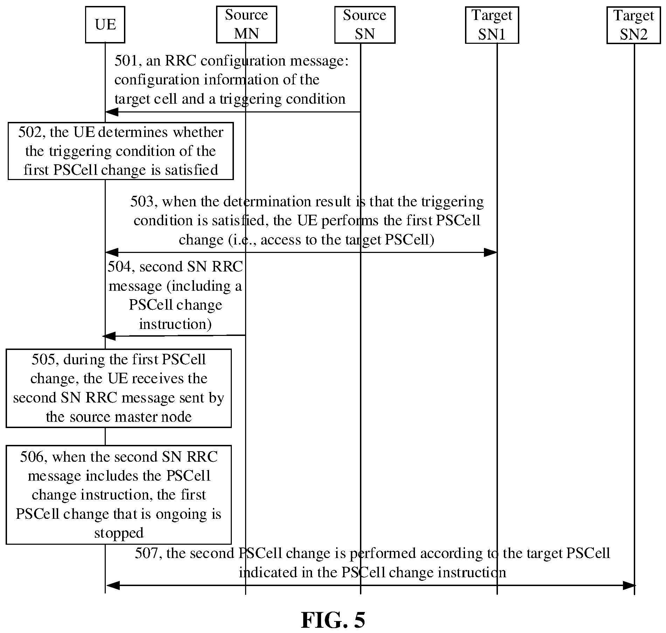

FIG. 5 shows a flowchart of a method for processing an SN RRC message provided by an exemplary embodiment of the invention. The method may be used in the communication system shown in FIG. 1, and the method includes operations as follows.

In operation 501, a source SN sends an RRC reconfiguration message to the UE, where the RRC reconfiguration message carries configuration information of a target PSCell and a triggering condition.

The configuration information of the target PSCell includes but is not limited to at least one of the following information: parameters of Medium Access Control (MAC) layer of the target PSCell, parameters of Radio Resource Control (RRC) layer of the target PSCell, Packet Data Convergence Protoco1 (PDCP) layer parameters of the target PSCell, measurement configuration of the target PSCell, etc.

The triggering condition is a triggering condition for the first conditional PScell change, or the triggering condition is a triggering condition for a conditional handover to a target PSCell. For example, the triggering condition includes at least one of a measurement event A3, a measurement event, A5 or a measurement event A6.

The source SN sends an RRC reconfiguration message on the SRB 3 to the UE in the connected state. The RRC reconfiguration message carries the configuration information of the target PSCell and the triggering condition for the first PSCell change.

As another example, the source master node may also send an RRC reconfiguration message on SRB 1 to the UE in the connected state.

In operation 502, the UE determines whether the triggering condition of the first PScell change is satisfied.

When triggering condition is satisfied, proceed to operation 503; when the triggering condition is not satisfied, operation 502 is continued.

In operation 503, when the determination result is that the triggering condition is satisfied, the UE performs the first PSCell change (access to the target PSCell).

When triggering condition is satisfied, the UE starts to perform the change procedure from the source PSCell to the target PSCell.

In operation 504, the source master node sends a second SN RRC message to the UE.

The source master node sends a second SN RRC message to the UE on SRB1. There are two types of second SN RRC messages.

The first type of second SN RRC message is a PSCell change instruction, which is used to instruct the UE to perform handover from the source PSCell to another PSCell.

The second type of second SN RRC message is a source PSCell reconfiguration message, which is used to instruct the UE to reconfigure all or part of the parameters of the source PSCell.

Herein, when the second SN RRC message carries a target field, it belongs to the first type; when the second SN RRC message does not carry the target field, it belongs to the second type. Exemplarily, the target field is a reconfigurationWithSync field.

In operation 505, during the first PSCell change, the UE receives the second SN RRC message from the source master node.

During the first PSCell change, the UE continues to monitor the SN RRC message transmitted by the source MN via SRB1. That is, the UE receives the second SN RRC message transmitted by the source master node on the SRB1.

When the second SN RRC message carries a target field, the UE determines that the second SN RRC message includes the PSCell change instruction. When the second SN RRC message does not carry the target field, the UE determines that the second SN RRC message is the source PSCell reconfiguration message.

Herein, the target field is a reconfigurationWithSync field.

In operation 506, when the second SN RRC message includes the PSCell change instruction, the first PSCell change that is ongoing is stopped.

In operation 507, a second PSCell change is performed according to a target PSCell indicated in the PSCell change instruction.

Assuming that the first PSCell change is a handover from the source PSCell to a first target PSCell, and the second PSCell change is a handover from the source PSCell to a second target PSCell.

After receiving the PSCell change instruction, the UE stops handover from the source PSCell to the first target PSCell, and performs handover according to the target PSCell (the second PSCell) indicated in the PSCell change instruction.

It should be noted that the PSCell change may be triggered by the source MN or the source SN.

To sum up, according to the method provided in the embodiment, during conditional PScell change, the UE still maintains a connection with the source MN, thus it can receive the PSCell change instruction from the source MN and execute the received instruction. It is possible to ensure, to a greater extent, that the PSCell change is controlled by the network side, that is, the priority of the second PSCell change triggered by the network side is higher than the priority of the first conditional PSCell change triggered by the UE side.

It should be noted that in other possible embodiments, the UE may also ignore the PSCell change instruction from the source MN, and continue the first PSCell change that is ongoing. Then, the priority of the second PSCell change triggered by the network side is lower than the priority of the first conditional PScell change triggered by the UE side.

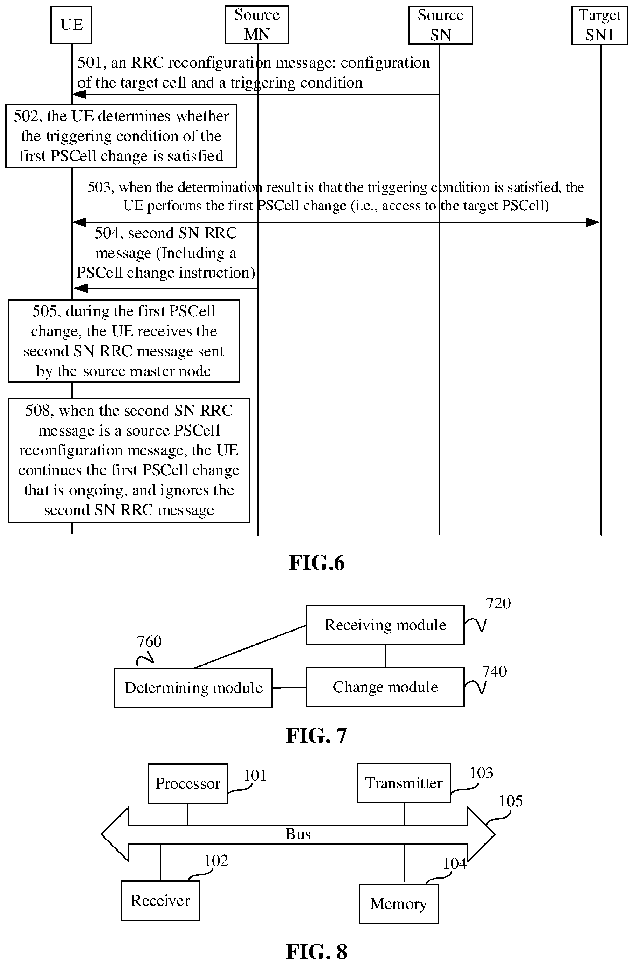

For the above third processing manner (the UE receives the source PSCell reconfiguration instruction from the source MN during the PSCell change, but does not execute it), an embodiment is described with reference to FIG. 6.

In operation 501, a source SN sends an RRC reconfiguration message to UE, where the RRC reconfiguration message carries configuration information of a target PSCell and a triggering condition.

In operation 502, the UE determines whether the triggering condition for the first PSCell change is satisfied;

When triggering condition is satisfied, proceed to operation 503; when the triggering condition is not satisfied, operation 502 is continued.

In operation 503, when the determination result is that the triggering condition is satisfied, the UE performs the first PSCell change (i.e., access to the target PSCell).

In operation 504, the source master node sends a second SN RRC message to the UE.

In operation 505, during the first PSCell change, the UE receives the second SN RRC message sent by the source master node.

For the description of the foregoing operations 501 to 505, reference may be made to FIG. 5, and details are not repeated herein.

In operation 508, when the second SN RRC message is a source PSCell reconfiguration message, the UE continues the first PSCell change that is ongoing, and ignores the second SN RRC message.

Since the second SN RRC message is a message used for reconfiguring the source PSCell and the source PSCell no longer provides service to the UE after the handover to the target PSCell, the UE ignores the second SN RRC message and does not respond to it.

To sum up, according to the method provided in this embodiment, during the conditional PScell change, the UE still maintains a connection with the source MN, and therefore the UE can still receive the RRC message from the source MN. The source PSCell reconfiguration instruction sent by the source MN is received but not executed, because the source PSCell reconfiguration instruction conflicts with the ongoing access to the target PSCell, which is thus ignored by the UE to avoid the conflict.

The above three embodiments can be implemented individually, or in combination of two, or in combination of the three, which is not limited in the present disclosure. The aforementioned first PSCell change is the PSCell change triggered based on a pre-configured condition. The "Change" includes addition or change.

FIG. 6 shows a block diagram of a device for processing an SN RRC message provided by an exemplary embodiment of the present disclosure. The device includes a receiving module 620.

The receiving module 620 is configured to stop receiving the first SN RRC message from the source SN during the first PSCell change.

In an alternative embodiment, the first SN RRC message is the SN RRC message sent on SRB3.

In an alternative embodiment, the device further includes: a change module 640.

The receiving module 620 is further configured to receive the second SN RRC message from the source MN during the first PSCell change;

The change module 640 is configured to: when the second SN RRC message includes a PSCell change instruction, stop the first PSCell change that is ongoing, and perform the second PSCell change according to the target PSCell indicated in the PSCell change instruction.

In an alternative embodiment, the device further includes a determining module 660.

The determining module 660 is configured to: when the second SN RRC message carries a target field, determine that the second SN RRC message includes the PSCell change instruction.

In an alternative embodiment, the device further includes: a change module 640.

The receiving module 620 is configured to receive a second SN RRC message from the source MN during the first PSCell change.

The change module 640 is configured to: continue the first PSCell change that is ongoing, and ignore the second SN RRC message when the second SN RRC message is a source PSCell reconfiguration message.

In an alternative embodiment, the device further includes a determining module 660.

The determining module 660 is configured to: when the second SN RRC message dose not carry a target field, determine that the second SN RRC message is a source PSCell reconfiguration message.

In an alternative embodiment, the second SN RRC message is an SN RRC message sent on SRB 1.

In an alternative embodiment, the target field is a reconfigurationWithSync field.

In an alternative embodiment, the first PSCell change is a PSCell change triggered based on a pre-configured condition.

It should be noted that the processing functions of the various (three) SN RRC messages of the foregoing modules can be implemented individually or in combination into different embodiments, which are not limited in the embodiments of the present disclosure. Examples are given as follows.

The receiving module 620 is configured to receive the second SN RRC message from the source MN during the PSCell change; and

the change module 640 is configured to ignore or respond to the second SN RRC message according to a type of the second SN RRC message.

In an alternative embodiment, the change module 640 is configured to: when the second SN RRC message includes a PSCell change instruction, stop the first PSCell change that is ongoing, and perform a second PSCell change according to the target PSCell indicated in the PSCell change instruction; or, when the second SN RRC message is a source PSCell reconfiguration message, continue the first PSCell change that is ongoing, and ignore the second SN RRC message.

In an alternative embodiment, the second SN RRC message is an SN RRC message transmitted on the SRB 1.

In an alternative embodiment, the determining module 660 is configured to: when the second SN RRC message carries a target field, determine that the second SN RRC message includes the PSCell change instruction; and when the second SN RRC message does not carry the target field, determine that the second SN RRC message is the source PSCell reconfiguration message.

FIG. 7 shows a schematic structural diagram of a communication device (UE or access network device) provided by an exemplary embodiment of the invention. The UE includes a processor 101, a receiver 102, a transmitter 103, a memory 104, and a bus 105.

The processor 101 includes one or more processing cores, and the processor 101 executes various functional applications and information processing by running software programs and modules.

The receiver 102 and the transmitter 103 may be implemented as a communication component, and the communication component may be a communication chip.

The memory 104 is connected to the processor 101 through a bus 105.

The memory 104 may be used to store at least one instruction, and the processor 101 is used to execute the at least one instruction to implement each operation in the foregoing method embodiment.

In addition, the memory 104 can be implemented by any type of volatile or non-volatile storage device or a combination thereof. The volatile or non-volatile storage device includes, but is not limited to: magnetic disks or optical disks, electrically erasable and programmable Read-only memory (EEPROM), erasable programmable read-only memory (EPROM), static anytime access memory (SRAM), read-only memory (ROM), magnetic memory, flash memory, programmable read-only memory (PROM).

In an exemplary embodiment, there is further provided a computer-readable storage medium. The computer-readable storage medium stores at least one instruction, at least one program, code set, or instruction set, the at least one instruction, the At least one piece of program, the code set or the instruction set is loaded and executed by the processor to implement the SN RRC message processing method executed by the UE provided in the foregoing method embodiments.

In an exemplary embodiment, there is further provided a computer program product. The computer program product stores at least one instruction, at least one program, code set, or instruction set, the at least one instruction, the at least one program, the code set or instruction set is loaded and executed by the processor to implement the SN RRC message processing method executed by the UE provided in the foregoing method embodiments.

Those of ordinary skill in the art can understand that all or part of the operations in the foregoing embodiments can be implemented by hardware, or by completed a program instructing related hardware. The program can be stored in a computer-readable storage medium. The storage medium mentioned can be a read-only memory, a magnetic disk or an optical disk, etc.

The above are only alternative embodiments of the present disclosure and not intended to limit the scope of protection of the present disclosure. Any modification, equivalent substitution, improvement, etc. made within the principle of the present invention as defined in the claims shall be included in the protection of this application within range.

## Claims

1. A method for processing a Secondary Node Radio Resource Control, SN RRC, message, **characterized by** comprising:
when it is determined (403), by User Equipment, UE, that a triggering condition is satisfied, performing, by the UE, a first Primary Secondary Cell, PSCell, change; and
stopping (404), by the UE, receiving a first SN RRC message from a source Secondary Node, SN, during the first PSCell change.

2. The method of claim 1, wherein the triggering condition is a triggering condition of the first PSCell change that is a conditional PSCell change.

3. The method of claim 1, wherein the first SN RRC message is an SN RRC message transmitted on a Signaling Radio Bearer, SRB, 3.

4. The method of claim 1, further comprising:
receiving (505), by the UE, a second SN RRC message from a source Master Node, MN, during the first PSCell change; and
when the second SN RRC message comprises a PSCell change instruction, stopping (506), by the UE, the first PSCell change that is ongoing, and performing (507) access according to a target PSCell indicated in the PSCell change instruction.

5. The method of any one of claims 1 to 4, wherein the first PSCell change is a PSCell change triggered based on a pre-configured condition.

6. The method of any one of claims 1 to 4, wherein the UE receives configuration information of a target PSCell and the triggering condition of the first PSCell change, which are borne by an SRB 1.

7. The method of any one of claims 1 to 4, wherein the UE receives a Radio Resource Control, RRC, reconfiguration message borne by an SRB 3, the RRC reconfiguration message carrying configuration information of a target PSCell and the triggering condition of the first PSCell change.

8. A User Equipment, UE, adapted to perform the method according to any one of claims 1 to 7.

9. The UE of claim 8, comprising:
a change module (740), configured to, when it is determined by the UE that a triggering condition is satisfied, perform a first Primary Secondary Cell, PSCell, change; and
a receiving module (720), configured to stop receiving a first SN RRC message from a source Secondary Node, SN, during the first PSCell change.

10. The UE of claim 9, wherein the triggering condition is a triggering condition of the first PSCell change that is a conditional PSCell change.

11. The UE of claim 9, wherein the first SN RRC message is an SN RRC message transmitted on a Signaling Radio Bearer, SRB, 3.

12. The UE of any one of claims 9 to 11, wherein the first PSCell change is a PSCell change triggered based on a pre-configured condition.

13. The UE of any one of claims 9 to 11, wherein the UE is configured to receive configuration information of a target PSCell and the triggering condition of the first PSCell change, which are borne by an SRB 1; or the UE is configured to receive a Radio Resource Control, RRC, reconfiguration message borne by an SRB 3, the RRC reconfiguration message carrying configuration information of a target PSCell and the triggering condition of the first PSCell change.

14. The UE of claim 8, comprising:
a processor;
a transceiver connected to the processor; and
a memory configured to store instructions executable by the processor,
wherein the processor is configured to load and execute the executable instructions to implement the method for processing an SN RRC message according to any one of claims 1 to 7.

15. A computer-readable storage medium having stored thereon executable instructions that are loaded and executed by a processor of the UE of claim 14 to perform the method for processing an SN RRC message according to any one of claims 1 to 7.

## Patentansprüche

1. Verfahren zum Verarbeiten einer Sekundärknoten-Funkressourcensteuerungs- ("Secondary Node Radio Resource Control "-, SN-RRC-)Nachricht, **dadurch gekennzeichnet, dass** es umfasst:
wenn durch ein Benutzerendgerät ("User Equipment", UE) ermittelt wird (403), dass eine Auslösebedingung erfüllt ist, Durchführen einer ersten Primär-Sekundärzellen- ("Primary Secondary Cell"-, PSCell-)Änderung durch das UE; und
Beenden (404) des Empfangens einer ersten SN-RRC-Nachricht von einem Quell-Sekundärknoten (SN) durch das UE während der ersten PSCell-Änderung.

2. Verfahren nach Anspruch 1, wobei die Auslösebedingung eine Auslösebedingung der ersten PSCell-Änderung ist, die eine bedingte PSCell-Änderung ist.

3. Verfahren nach Anspruch 1, wobei die erste SN-RRC-Nachricht eine auf einem Signalisierungsfunkträger ("Signaling Radio Bearer", SRB) (3) übertragene SN-RRC-Nachricht ist.

4. Verfahren nach Anspruch 1, ferner umfassend:
Empfangen (505) einer zweiten SN-RRC-Nachricht von einem Quell-Master-Knoten ("Master Node", MN) durch das UE während der ersten PSCell-Änderung; und
wenn die zweite SN-RRC-Nachricht eine PSCell-Änderungsanweisung umfasst, Beenden (506) der anstehenden ersten PSCell-Änderung durch das UE und Durchführen (507) des Zugriffs gemäß einer in der PSCell-Änderungsanweisung angegebenen Ziel-PSCell.

5. Verfahren nach einem der Ansprüche 1 bis 4, wobei die erste PSCell-Änderung eine basierend auf einer voreingestellten Bedingung ausgelöste PSCell-Änderung ist.

6. Verfahren nach einem der Ansprüche 1 bis 4, wobei das UE Konfigurationsinformationen einer Ziel-PSCell und die Auslösebedingung der ersten PSCell-Änderung empfängt, die von einem SRB 1 geführt werden.

7. Verfahren nach einem der Ansprüche 1 bis 4, wobei das UE eine von einem SRB 3 geführte Funkressourcensteuerungs- ("Radio Resource Control"-, RRC-)Neukonfigurationsnachricht empfängt, wobei die RRC-Neukonfigurationsnachricht Konfigurationsinformationen einer Ziel-PSCell und die Auslösebedingung der ersten PSCell-Änderung führt.

8. Benutzerendgerät (UE), eingerichtet zum Durchführen des Verfahrens nach einem der Ansprüche 1 bis 7.

9. UE nach Anspruch 8, umfassend:
ein Änderungsmodul (740), ausgelegt, wenn durch das UE ermittelt wird, dass eine Auslösebedingung erfüllt ist, zum Durchführen einer ersten Primär-Sekundärzellen-(PSCell-)Änderung, und
ein Empfangsmodul (720), ausgelegt zum Beenden des Empfangs einer ersten SN-RRC-Nachricht von einem Quell-Sekundärknoten (SN) während der ersten PSCell-Änderung.

10. UE nach Anspruch 9, wobei die Auslösebedingung eine Auslösebedingung der ersten PSCell-Änderung ist, die eine bedingte PSCell-Änderung ist.

11. UE nach Anspruch 9, wobei die erste SN-RRC-Nachricht eine auf einem Signalisierungsfunkträger (SRB) (3) übertragene SN-RRC-Nachricht ist.

12. UE nach einem der Ansprüche 9 bis 11, wobei die erste PSCell-Änderung eine basierend auf einer voreingestellten Bedingung ausgelöste PSCell-Änderung ist.

13. UE nach einem der Ansprüche 9 bis 11, wobei das UE ausgelegt ist zum Empfangen von Konfigurationsinformationen einer Ziel-PSCell und der Auslösebedingung der ersten PSCell-Änderung, die von einem SRB 1 geführt werden;
oder
das UE ausgelegt ist zum Empfangen einer von einem SRB 3 geführten Funkressourcensteuerungs-(RRC-)Neukonfigurationsnachricht, wobei die RRC-Neukonfigurationsnachricht Konfigurationsinformationen einer Ziel-PSCell und die Auslösebedingung der ersten PSCell-Änderung führt.

14. UE nach Anspruch 8, umfassend:
einen Prozessor:
einen mit dem Prozessor verbundenen Sendeempfänger; und
einen Speicher, ausgelegt zum Speichern von durch den Prozessor ausführbaren Anweisungen,
wobei der Prozessor ausgelegt ist zum Laden und Ausführen der ausführbaren Anweisungen zum Implementieren des Verfahrens zum Verarbeiten einer SN-RRC-Nachricht nach einem der Ansprüche 1 bis 7.

15. Computerlesbares Speichermedium, aufweisend darauf gespeicherte ausführbare Anweisungen, die durch einen Prozessor der UE nach Anspruch 14 geladen und ausgeführt werden, um das Verfahren zum Verarbeiten einer SN-RRC-Nachricht nach einem der Ansprüche 1 bis 7 durchzuführen.

## Revendications

1. Procédé de traitement d'un message de contrôle des ressources radio d'un noeud secondaire (RRC SN), **caractérisé en ce qu'**il comprend les étapes consistant à :
lorsqu'il est déterminé (403), par un équipement d'utilisateur (UE), qu'une condition de déclenchement est satisfaite, effectuer, par l'UE, un premier changement de cellule principale de station de base secondaire (PSCell) ; et
arrêter (404), par l'UE, la réception d'un premier message RRC SN en provenance d'un noeud secondaire (SN) source pendant le premier changement de PSCell.

2. Procédé selon la revendication 1, dans lequel la condition de déclenchement est une condition de déclenchement du premier changement de PSCell qui est un changement de PSCell conditionnel.

3. Procédé selon la revendication 1, dans lequel le premier message RRC SN est un message RRC SN transmis sur une porteuse radio de signalisation (SRB) 3.

4. Procédé selon la revendication 1, comprenant en outre les étapes consistant à :
recevoir (505), par l'UE, un second message RRC SN en provenance d'un noeud maître (MN) source pendant le premier changement de PSCell ; et
lorsque le second message RRC SN comprend une instruction de changement de PSCell, arrêter (506), par l'UE, le premier changement de PSCell en cours et effectuer (507) un accès selon une PSCell cible indiquée dans l'instruction de changement de PSCell.

5. Procédé selon l'une quelconque des revendications 1 à 4, dans lequel le premier changement de PSCell est un changement de PSCell déclenché sur la base d'une condition préconfigurée.

6. Procédé selon l'une quelconque des revendications 1 à 4, dans lequel l'UE reçoit des informations de configuration d'une PSCell cible et la condition de déclenchement du premier changement de PSCell, qui sont transportées par une SRB 1.

7. Procédé selon l'une quelconque des revendications 1 à 4, dans lequel l'UE reçoit un message de reconfiguration de contrôle des ressources radio (RRC) transporté par une SRB 3, le message de reconfiguration RRC transportant des informations de configuration d'une PSCell cible et la condition de déclenchement du premier changement de PSCell.

8. Équipement d'utilisateur (UE) conçu pour effectuer le procédé selon l'une quelconque des revendications 1 à 7.

9. UE selon la revendication 8, comprenant :
un module de changement (740), configuré pour, lorsqu'il est déterminé par l'UE qu'une condition de déclenchement est satisfaite, effectuer un premier changement de cellule principale de station de base secondaire (PSCell) ; et
un module de réception (720), configuré pour arrêter la réception d'un premier message RRC SN en provenance d'un noeud secondaire (SN) source pendant le premier changement de PSCell.

10. UE selon la revendication 9, dans lequel la condition de déclenchement est une condition de déclenchement du premier changement de PSCell qui est un changement de PSCell conditionnel.

11. UE selon la revendication 9, dans lequel le premier message RRC SN est un message RRC SN transmis sur une porteuse radio de signalisation (SRB) 3.

12. UE selon l'une quelconque des revendications 9 à 11, dans lequel le premier changement de PSCell est un changement de PSCell déclenché sur la base d'une condition préconfigurée.

13. UE selon l'une quelconque des revendications 9 à 11,
l'UE étant configuré pour recevoir des informations de configuration d'une PSCell cible et la condition de déclenchement du premier changement de PSCell, qui sont transportées par une SRB 1 ; ou
l'UE étant configuré pour recevoir un message de reconfiguration de contrôle des ressources radio (RRC) transporté par une SRB 3, le message de reconfiguration RRC transportant des informations de configuration d'une PSCell cible et la condition de déclenchement du premier changement de PSCell.

14. UE selon la revendication 8, comprenant :
un processeur ;
un émetteur-récepteur connecté au processeur ; et
une mémoire configurée pour stocker des instructions exécutables par le processeur,
le processeur étant configuré pour charger et exécuter les instructions exécutables pour mettre en œuvre le procédé de traitement d'un message RRC SN selon l'une quelconque des revendications 1 à 7.

15. Support de stockage lisible par ordinateur, sur lequel sont stockées des instructions qui sont chargées et exécutées par un processeur de l'UE selon la revendication 14 pour effectuer le procédé de traitement d'un message RRC SN selon l'une quelconque des revendications 1 à 7.
